# EUROPÄISCHE PATENTSCHRIFT

(11) **EP 4 117 442 B1**
(45) Veröffentlichungstag und Bekanntmachung des Hinweises auf die Patenterteilung: **17.06.2026**
(21) Anmeldenummer: 21719040.4
(22) Anmeldetag: 08.03.2021
(51) Int. Cl.: A22B 3/06, A22B 3/08

(54) **ELEKTRODE FÜR EINE TIERBETÄUBUNGSVORRICHTUNG**
ELECTRODE FOR AN ANIMAL STUNNING APPARATUS
ÉLECTRODE POUR APPAREIL D'ÉTOURDISSEMENT D'ANIMAUX

(30) Priorität: 13.03.2020 DE 102020106994
(43) Veröffentlichungstag der Anmeldung: 18.01.2023
(73) Patentinhaber: Freund Maschinenfabrik GmbH & Co. KG, 33106 Paderborn (DE)
(72) Erfinder: PÖTTKER, Jens, 33100 Paderborn (DE); KÖNIG, Joachim, 37170 Uslar (DE)
(74) Vertreter: Wickord, Wiro
(86) Internationale Anmeldenummer: PCT/DE2021/100232
(87) Internationale Veröffentlichungsnummer: WO 2021/180275

(56) Entgegenhaltungen:
- EP-A1- 2 253 218
- DE-C- 573 842
- DE-U- 1 952 329
- US-A- 1 935 138

## Beschreibung

Die Erfindung betrifft eine Elektrode für eine Tierbetäubungsvorrichtung umfassend einen an die Tierbetäubungsvorrichtung festlegbaren Unterbodenabschnitt und umfassend wenigstens zwei geradlinig ausgebildete und von dem Unterbodenabschnitt abragende Seitenwandabschnitte, wobei an einer dem Unterbodenabschnitt abgewandten Oberkante der Seitenwandabschnitte eine Verzahnung mit zackenförmigen Vorsprüngen ausgebildet ist.

Bedingt durch einen zunehmenden Wettbewerbsdruck und ein gesteigertes Preis- und Qualitätsbewusstsein der Konsumenten haben Schlachtbetriebe heutzutage ein nachhaltiges wirtschaftliches Vorgehen und eine optimale Fleischqualität zu erfüllen. Daneben gilt es ethische Anforderungen des Tierschutzes einzuhalten.

Ein ethischer Grundsatz des Tierschutzes ist, dass Tiere - sofern zumutbar - nur unter Vermeidung von Schmerzen getötet werden dürfen und vorzugsweise vor dem Töten durch Betäubung in einen Zustand der Wahrnehmungs- und Empfindungslosigkeit versetzt worden sind. Für das Schlachten von warmblütigen Tieren ist vorgeschrieben, dass diese nur geschlachtet werden dürfen, wenn dem Töten durch Blutentzug eine Betäubung vorausgeht.

In modernen Schlachtbetrieben findet die Elektrobetäubung breite Anwendung. Hierbei ist es so, dass die Schlachttiere, beispielsweise Schweine, Schafe oder Rinder, durch Indizierung eines elektrischen Stroms in deren Gehirn und/oder Herz betäubt werden. Die Schlachttiere werden zur elektrischen Betäubung in der Regel mit einer zangenförmigen Tierbetäubungsvorrichtung (Betäubungszange) gegriffen, wobei im Wesentlichen endseitig an zwei Zangenschenkeln, den Elektrodenköpfen, der Betäubungszange jeweils eine Elektrode vorgesehen ist.

Die Elektroden übernehmen bei der elektrischen Betäubung eine zentrale Funktion. Über sie wird der elektrische Strom in das Schlachttier eingeleitet. Dabei stellt die Haut den höchsten elektrischen Widerstand bei den Schlachttieren dar, den es zu überwinden gilt. Um Stress- und Abwehrreaktionen der Schlachttiere zu reduzieren, welche sich nachteilig auf die Fleischqualität auswirken, sollte die Betäubungswirkung der Elektrobetäubung möglichst rasch nach dem Ansetzen der Elektroden einsetzen. Um den elektrischen Strom unterhalb der Haut in das Unterhautfettgewebe der Schlachttiere einzuleiten beziehungsweise um den elektrischen Widerstand der Haut zu überwinden, werden im Stand der Technik bevorzugt Elektroden mit spitzen, gezackten Vorsprüngen verwendet, welche rasch durch die Haut in das Unterhautfettgewebe der Schlachttiere eindringen können.

Am Markt haben sich gegenwärtig im Wesentlichen zwei verschiedene Ausführungsformen von Elektroden für Tierbetäubungsvorrichtungen etabliert.

Zum einen sind topfförmige Elektroden mit einem stirnseitig umlaufenden Verzahnungsrand mit zackenförmigen Vorsprüngen bekannt. Diese sind beispielsweise in der DE 1 952 329 U offenbart. Durch den umlaufenden Verzahnungsrand weisen diese Elektroden eine vergleichsweise große, vorteilhafte Kontaktfläche auf. Gleichwohl besteht ein wesentlicher Nachteil dieser Elektroden darin, dass sie spanabhebend und damit insbesondere aufgrund eines hohen Materialverbrauchs sehr aufwendig beziehungsweise kostenintensiv gefertigt werden müssen.

Eine ähnliche Elektrode zeigt die DE 573 842 C.

Aus der US 1 935 138 A ist eine Tierbetäubungsvorrichtung mit drei beabstandet zueinander angeordneten Elektroden bekannt.

Zum anderen sind gattungsgemäße Elektroden mit einem U-förmigen Querschnitt bekannt, welche zwei einander parallel gegenüberliegende Seitenwandabschnitte mit einer endseitigen Verzahnung aus gezackten Vorsprüngen aufweisen. Derartige Elektroden sind beispielsweise in der PL 175 438 B1 angegeben. Sie lassen sich vergleichsweise einfach und kostengünstig als ein Biegeteil aus einem Stahlblech fertigen. Gleichwohl ist es bei diesen Elektroden so, dass die verzahnten, parallelen Seitenwandabschnitte nur eine begrenzte Gesamtanzahl an Verzahnungen bereitstellen, die durch die Haut in das Unterhautfettgewebe der zu betäubenden Schlachttiere eindringen können. Daraus resultiert für diese Elektroden ein vergleichsweise geringer elektrischer Leitwert beziehungsweise eine vergleichsweise kleine Kontaktfläche. Insofern besteht durch die geringe Kontaktfläche dieser Elektroden eine erhöhte Gefahr, dass infolge einer erforderlichen erhöhten elektrischen Stromstärke an den angesetzten Hautstellen der Schlachttiere hohe Übergangswiderstände und somit Verbrennungen beziehungsweise Strommarken ausgebildet werden. Auch kann es zu Überleitungsstörungen kommen, die den elektrischen Stromfluss und somit die Betäubungswirkung abbrechen lassen können. Zudem ist die Anzahl der in das Unterhautfettgewebe eindringenden und den elektrischen Strom einleitenden Verzahnungen abhängig von einem Neigungswinkel, mit dem die Elektroden zu einer Hautoberfläche der zu betäubenden Schlachttiere angesetzt werden. Ein optimaler Neigungswinkel ist hierbei gegeben, wenn die Verzahnungen der Elektroden senkrecht zu der Hautoberfläche des Schlachttieres angesetzt sind. Sofern die Elektroden mit einem hiervon abweichenden, ungünstigen Neigungswinkel an das Schlachttier angesetzt werden, kann es passieren, dass eine nicht ausreichende Anzahl an Vorsprüngen der Verzahnung durch die Haut in das Unterhautfettgewebe des Schlachttiers eindringt. Infolgedessen kann es passieren, dass für die Elektrobetäubung ein nicht ausreichender elektrischer Leitwert zur Verfügung steht. Diese Elektroden erfordern insofern eine genaue Ausrichtung an den Schlachttieren für eine zuverlässige Elektrobetäubung.

Aufgabe der vorliegenden Erfindung ist es, eine gattungsgemäße Elektrode für Tierbetäubungsvorrichtungen in einer alternativen und neuen Ausführungsform anzugeben, wobei die Elektrode einen hohen elektrischen Leitwert aufweist, eine einfache Anwendung ermöglicht und sich einfach sowie kostengünstig fertigen lässt.

Zur Lösung der Aufgabe weist die Erfindung die Merkmale des Patentanspruchs 1 auf.

Der besondere Vorteil der Erfindung besteht darin, dass die Seitenwandabschnitte eine vergrößerte Verzahnung ausbilden können. Dadurch ergibt sich für die erfindungsgemäße Elektrode ein vergleichsweise hoher elektrischer Leitwert, der sich zum Betäuben des Schlachttiers verwenden lässt. Des Weiteren ist die Ausrichtung beziehungsweise Handhabung der Tierbetäubungsvorrichtung durch die vergrößerte Verzahnung erleichtert. So stehen selbst dann ausreichend viele Vorsprünge zum Eindringen in die Haut des Schlachttiers und damit ein ausreichend hoher elektrischer Leitwert zur Elektrobetäubung desselben zur Verfügung, wenn die Elektrode in einem ungünstigen Neigungswinkel an die Hautoberfläche des Schlachttieres angesetzt ist. Dadurch ist eine zuverlässige und wirtschaftlich ausführbare Elektrobetäubung bei einer deutlichen Reduzierung von Schlachtschäden ermöglicht.

Ein weiterer wesentlicher Vorteil der Erfindung besteht darin, dass die Elektrode grundsätzlich kostengünstig herstellbar ist, indem die Seitenwandabschnitte gegenüber dem Unterbodenabschnitt umgebogen sind. Die erfindungsgemäße Elektrode lässt sich dadurch besonders wirtschaftlich als ein Biegeteil beziehungsweise als ein Blechbiegeteil herstellen.

Nach einer bevorzugten Ausführungsform der Erfindung sind wenigstens drei Seitenwandabschnitte umfasst, wobei jeweils zwei benachbarte Seitenwandabschnitte mit dem Winkel im Bereich von 30° bis 150° zueinander orientiert sind. Hierdurch ergibt sich eine besonders vorteilhafte, vergrößerte Verzahnung und die Elektrode ist zudem kostengünstig, beispielsweise als ein Biege- beziehungsweise Blechbiegeteil, herstellbar.

Nach einer Weiterbildung der Erfindung ist zwischen den zwei benachbarten Seitenwandabschnitten beziehungsweise zwischen dem ersten Seitenwandabschnitt und dem zweiten Seitenwandabschnitt ein Längsspalt gebildet. Die erfindungsgemäße Elektrode lässt sich hierdurch besonders kostengünstig als ein Biegeteil beziehungsweise als ein Blechbiegeteil fertigen, indem die Seitenwandabschnitte gegenüber dem Unterbodenabschnitt umgebogen sind.

Nach einer Weiterbildung der Erfindung bilden die Verzahnungen der Seitenwandabschnitte einen im Wesentlichen umlaufenden Verzahnungsrand aus. Dieser im Wesentlichen umlaufende Verzahnungsrand der erfindungsgemäßen Elektrode kann ausreichend viele Vorsprünge zur Verfügung stellen, die durch die Haut in das Unterhautfettgewebe des zu betäubenden Schlachttieres eindringen können. Vorteilhaft resultiert hieraus eine hohe Kontaktfläche und somit ein hoher elektrischer Leitwert der Elektrode, weitgehend unabhängig davon, in welchem Winkel die Elektrode an die Hautoberfläche der zu betäubenden Schlachttiere angesetzt ist.

Eine Größe der Elektrode und eine Beschaffenheit der Vorsprünge, insbesondere eine Vorsprunghöhe und eine Vorsprungsteigung der Vorsprünge, sowie die Anzahl der Vorsprünge, können in Abhängigkeit der zu betäubenden Schlachttiere unterschiedlich beziehungsweise ungleichmäßig ausgeprägt sein. So werden die Größe der Elektrode und die Vorsprunghöhe in der Regel an die Anatomie und an die Haut sowie an eine Behaarung beziehungsweise Wolle (Fell) der Schlachttiere angepasst sein, um ein gleichförmigeres Anlegen der Verzahnung der Elektrode an einen ungleichmäßigen Tierkopf beziehungsweise Tierkörper des Schlachttieres zu ermöglichen und so eine vorteilhafte, gleichmäßig verteilte Stromdichte beziehungsweise einen gleichmäßig verteilten Stromfluss zu erzeugen. Bei Schlachttieren mit einer besonders dicken Haut beziehungsweise Fell weisen die Vorsprünge bevorzugt eine vergrößerte Vorsprunghöhe und eine erhöhte Vorsprungsteigung auf beziehungsweise sind spitzer ausgeprägt, um die Haut beziehungsweise das Fell des Schlachttieres besser durchdringen zu können.

Nach der Erfindung sind die Seitenwandabschnitte an Randseiten des Unterbodenabschnitts festgelegt. Vorteilhaft sind hierdurch zwischen dem Unterbodenabschnitt und den Seitenwandabschnitten hervorstehende Kanten vermieden, wodurch eine Reinigung der erfindungsgemäßen Elektrode vereinfacht ist. Des Weiteren ermöglicht es diese vorteilhafte Weiterbildung der Erfindung, die Seitenwandabschnitte grundsätzlich mit einer vergrößerten Oberkante und somit eine Verzahnung mit einer größeren Anzahl an Vorsprüngen auszubilden. Insofern ist der elektrische Leitwert der erfindungsgemäßen Elektrode erhöht und die Handhabung beziehungsweise die Ausrichtung der mit der erfindungsgemäßen Elektrode bestückten Tierbetäubungsvorrichtung vereinfacht.

Nach einer Weiterbildung der Erfindung ragen die Vorsprünge der Verzahnungen des Verzahnungsrands in eine gemeinsame Anlagefläche vor. Insofern ist beim Anlegen der Elektrode an die Hautoberfläche des zu betäubenden Schlachttieres sichergestellt, dass möglichst viele Verzahnungen gleichzeitig durch die Haut in das Unterhautfettgewebe des Schlachttieres eindringen können und dass infolgedessen ein ausreichend hoher elektrischer Leitwert für die Elektrobetäubung des Schlachttieres zur Verfügung steht. Der positive Effekt sind eine bessere Betäubungswirkung sowie eine Reduzierung von Schlachtschäden.

Nach einer alternativen Ausführungsform der Erfindung weisen die Vorsprünge der Verzahnungen des Verzahnungsrands eine unterschiedliche Verzahnungshöhe beziehungsweise die Seitenwandabschnitte eine unterschiedliche Seitenwandhöhe und/oder eine winkelig zu den Randseiten orientierte und/oder profiliert geformte Oberkante auf. Die Oberkante der Seitenwandabschnitte beziehungsweise die Vorsprünge der Verzahnungen sind insofern an die Anatomie der Schlachttiere anpassbar, sodass ein vorteilhafter, gleichmäßig verteilter Stromfluss beziehungsweise eine vorteilhafte, gleichmäßig verteilte Stromdichte in das Unterhautfettgewebe der Schlachttiere injiziert werden kann.

Nach einer Weiterbildung der Erfindung sind jedenfalls einige Seitenwandabschnitte rechtwinklig und/oder parallel zueinander ausgerichtet beziehungsweise ragen rechtwinklig von dem Unterbodenabschnitt ab. Diese Weiterbildung der Erfindung ermöglicht eine vorteilhafte kistenförmige Gestalt der erfindungsgemäßen Elektrode mit quadratisch beziehungsweise rechteckig angeordneten Seitenwandabschnitten. Dabei können die Seitenwandabschnitte an den Oberkanten eine besonders vorteilhafte, im Wesentlichen umlaufende Verzahnung ausbilden, die einen hohen elektrischen Leitwert für die Betäubung des Schlachttieres mittels elektrischen Stroms bereitstellt. Zudem können die Seitenwandabschnitte einfach und kostengünstig hergestellt werden, indem sie gegenüber dem Unterbodenabschnitt in einer Biegeoperation umgebogen werden. Durch die rechtwinkelige Ausrichtung der Seitenwandabschnitte zu dem Unterbodenabschnitt, können die Vorsprünge der Verzahnungen rechtwinklig und damit mit einem reduzierten Kraftaufwand in die Hautoberfläche der zu betäubenden Schlachttiere eindringen.

Nach einer Weiterbildung der Erfindung sind in dem Unterbodenabschnitt Durchbrüche vorgesehen. Die Durchbrüche dienen zum Durchführen von Verbindungsmitteln, über welche die Elektrode in einer Montageposition an die Tierbetäubungsvorrichtung festgelegt ist, beziehungsweise zum Durchführen eines Mitteldorns, welcher über die Vorsprünge der Verzahnung der Seitenwandabschnitte hinausragt. Vorteilhaft lässt sich hierdurch ein Schnellwechselsystem für eine Montage beziehungsweise Demontage der Elektroden an der Tierbetäubungsvorrichtung ausbilden. Bevorzugt sind hierfür lösbare Verbindungsmittel, insbesondere Schrauben, vorgesehen, über welche die Elektroden an der Tierbetäubungsvorrichtung lösbar festgelegt sind. So können die Elektroden bei Bedarf, etwa bei Abnutzungserscheinungen oder einer starken Verschmutzung, schnell und einfach ausgetauscht werden.

Der Mitteldorn ist bevorzugt direkt an der Tierbetäubungsvorrichtung festgelegt, sodass die Elektroden ohne eine zusätzliche Demontage des Mitteldorns von der Tierbetäubungsvorrichtung demontierbar sind. Der Mitteldorn kann zur Erhöhung des elektrischen Leitwerts der Tierbetäubungsvorrichtung elektrisch leitend ausgebildet sein und zusammen mit den Elektroden den elektrischen Strom in das Unterhautfettgewebe des Schlachttieres einleiten.

Nach einer Weiterbildung der Erfindung ist der Unterbodenabschnitt als ein Polygon und bevorzugt als ein regelmäßiges Polygon ausgebildet. Der Unterbodenabschnitt weist wenigstens drei Randseiten auf, wobei wenigstens zwei Randseiten des Unterbodenabschnitts jeweils ein Seitenwandabschnitt zugeordnet ist. Die Randseiten des als regelmäßigen Polygon ausgebildeten Unterbodenabschnitts sind jeweils gleich lang und bilden eine geschlossene Umrandung des Unterbodenabschnitts. Benachbarte Randseiten sind jeweils mit dem gleichen Winkel zueinander orientiert. Sofern die Elektrode benachbarte Seitenwandabschnitte aufweist, sind diese in demselben Winkel im Bereich von 30° bis 150° zueinander orientiert, wie jeweils benachbarte Randseiten des regelmäßig polygonförmigen Unterbodenabschnitts. Die erfindungsgemäße Elektrode lässt sich somit in einer symmetrischen und optisch ansprechenden Form bilden.

Nach einer Weiterbildung der Erfindung sind der Unterbodenabschnitt und/oder die Seitenwandabschnitte eben beziehungsweise flächig ausgebildet. Vorteilhaft lassen sich der Unterbodenabschnitt beziehungsweise die Seitenwandabschnitte hierdurch kostengünstig fertigen, beispielsweise aus einem Metallblech beziehungsweise aus einem aufgewickelten Metallband (Coil).

Nach der Erfindung ist die Elektrode einstückig als ein Stanz- und/oder Laser- und/oder Biegeteil und bevorzugt als ein Blechbiegeteil hergestellt. Derart gefertigte Elektroden lassen sich besonders wirtschaftlich bei einem geringen Verschnitt beziehungsweise Materialverbrauch fertigen.

Nach einer Weiterbildung der Erfindung ist die Elektrode mittels eines Laser-Biegeverfahrens hergestellt. Lasergeschnittene Blechzuschnitte als ein Halbzeug für die als Blechbiegeteil gefertigten Elektroden können mit sehr genauen und in der Regel bearbeitungsfreien, gratfreien Schnittkanten bei einer hohen Materialausnutzung und Wirtschaftlichkeit, auch in geringen Stückzahlen, gefertigt werden. Vorteilhaft lassen sich dabei mittels des verwendeten Lasers besonders scharfe beziehungsweise spitze Vorsprünge in die Seitenwandabschnitte der Elektroden einarbeiten, welche eine besonders leichte und damit kraftschonende beziehungsweise rasche Durchdringung der Haut der Schlachttiere und damit eine rasche elektrische Strominduzierung ermöglichen.

Vorteilhaft ist eine zusätzlich beziehungsweise durch den Laserprozess ausgeführte Laserstrahlhärtung der Elektroden vergleichsweise kostengünstig realisierbar. Die gehärteten Elektroden weisen vorteilhaft eine erhöhte Formstabilität und insofern eine erhöhte Ausrichtungsgenauigkeit bei einer erhöhten Lebensdauer auf.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

### Es zeigen:

- Fig. 1: eine erste perspektivische Ansicht von oben auf ein erstes Ausführungsbeispiel einer erfindungsgemäßen Elektrode,
- Fig. 2: die erfindungsgemäße Elektrode nach Fig. 1 in einer zweiten perspektivischen Ansicht von unten,
- Fig. 3: eine Draufsicht auf ein Ausführungsbeispiel eines Halbzeugs zur Herstellung der erfindungsgemäßen Elektrode nach Fig. 1,
- Fig. 4: eine Draufsicht auf ein zweites Ausführungsbeispiel einer erfindungsgemäßen Elektrode,
- Fig. 5: eine erste perspektivische Ansicht von oben auf ein drittes Ausführungsbeispiel einer erfindungsgemäßen Elektrode,
- Fig. 6: die erfindungsgemäße Elektrode nach Fig. 5 in einer zweiten perspektivischen Ansicht von unten,
- Fig. 7: eine Draufsicht auf ein Ausführungsbeispiel eines Halbzeugs zur Herstellung der erfindungsgemäßen Elektrode nach Fig. 5,
- Fig. 8: eine erste perspektivische Ansicht von oben auf ein viertes Ausführungsbeispiel einer erfindungsgemäßen Elektrode,
- Fig. 9: die erfindungsgemäße Elektrode nach Fig. 8 in einer zweiten perspektivischen Ansicht von unten,
- Fig. 10: eine Draufsicht auf ein Ausführungsbeispiel eines Halbzeugs zur Herstellung der erfindungsgemäßen Elektrode nach Fig. 8,
- Fig. 11: eine erste perspektivische Ansicht von oben auf ein fünftes Ausführungsbeispiel einer erfindungsgemäßen Elektrode,
- Fig. 12: die erfindungsgemäße Elektrode nach Fig. 11 in einer zweiten perspektivischen Ansicht von unten,
- Fig. 13: eine Draufsicht auf ein Ausführungsbeispiel eines Halbzeugs zur Herstellung der erfindungsgemäßen Elektrode nach Fig. 11,
- Fig. 14: eine erste perspektivische Ansicht von oben auf ein sechstes Ausführungsbeispiel einer erfindungsgemäßen Elektrode,
- Fig. 15: eine Unteransicht der erfindungsgemäßen Elektrode nach Fig. 14,
- Fig. 16: eine Draufsicht auf ein Ausführungsbeispiel eines Halbzeugs zur Herstellung der erfindungsgemäßen Elektrode nach Fig. 14,
- Fig. 17: eine erste perspektivische Ansicht von oben auf ein siebtes Ausführungsbeispiel einer nicht erfindungsgemäßen Elektrode in einer Zusammenbauposition, wobei die Elektrode mehrteilig aus zwei als Elektrodenstücke ausgebildeten Elektroden nach Fig. 14 gebildet ist,
- Fig. 18: eine zweite perspektivische Ansicht von unten auf die Elektrode nach Fig. 17,
- Fig. 19: eine Unteransicht der Elektrode nach Fig. 17,
- Fig. 20: eine Seitenansicht eines Ausführungsbeispiels einer Tierbetäubungsvorrichtung mit zwei daran in einer Montageposition festgelegten erfindungsgemäßen Elektroden nach Fig. 1,
- Fig. 21: eine perspektivische Ansicht der Tierbetäubungsvorrichtung nach Fig. 20,
- Fig. 22: ein Detail A der Tierbetäubungsvorrichtung nach Fig. 21,
- Fig. 23: eine perspektivische Ansicht der Tierbetäubungsvorrichtung nach Fig. 20 mit zwei daran in der Montageposition festgelegten erfindungsgemäßen Elektroden nach Fig. 11,
- Fig. 24: ein Detail B der Tierbetäubungsvorrichtung nach Fig. 23,
- Fig. 25: einen perspektivischen Ausbruch eines Zangenarms der Tierbetäubungsvorrichtung nach Fig. 20 mit der erfindungsgemäßen Elektrode nach Fig. 5 in der Montageposition festgelegt an einen Elektrodenkopf,
- Fig. 26: einen perspektivischen Ausbruch des Zangenarms der Tierbetäubungsvorrichtung nach Fig. 20 mit der Elektrode nach Fig. 17 in der Montageposition festgelegt an den Elektrodenkopf und
- Fig. 27: einen perspektivischen Ausbruch des Zangenarms der Tierbetäubungsvorrichtung nach Fig. 20 mit der erfindungsgemäßen Elektrode nach Fig. 8 in der Montageposition festgelegt an den Elektrodenkopf.

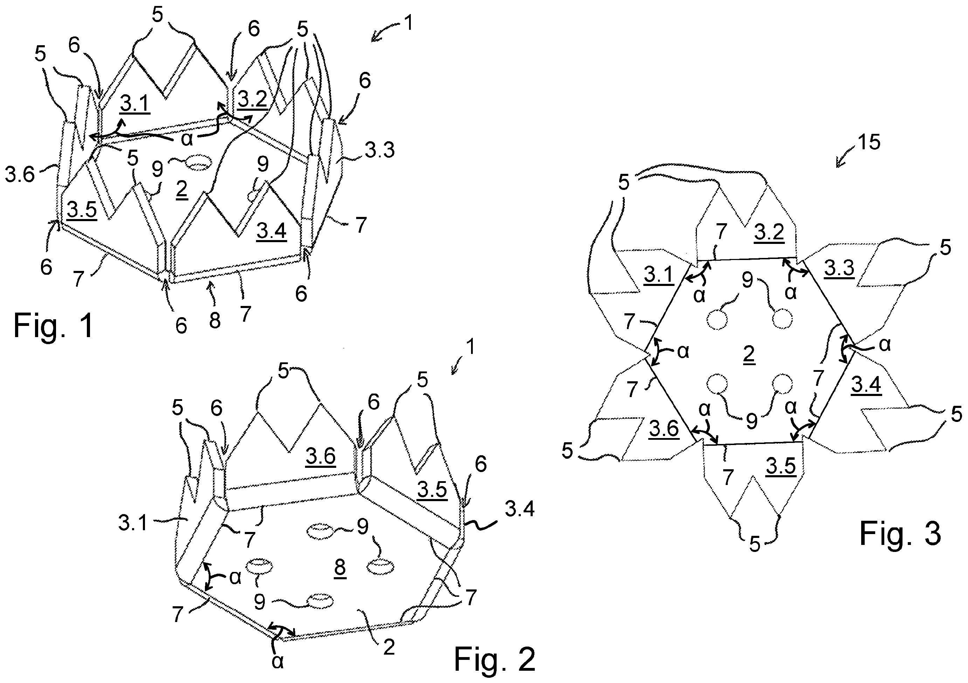

Die Fig. 1 und Fig. 2 zeigen jeweils in einer perspektivischen Ansicht ein erstes Ausführungsbeispiel einer erfindungsgemäßen Elektrode 1 für eine Tierbetäubungsvorrichtung 4 zur Betäubung von Schlachttieren mittels elektrischen Stroms (Elektrobetäubung). Dabei weist die erfindungsgemäße Elektrode 1 eine im Wesentlichen kronenförmige Gestalt auf.

Die Elektrode 1 umfasst einen flächigen beziehungsweise ebenen Unterbodenabschnitt 2, welcher in Form eines regelmäßigen Sechsecks ausgebildet ist. Demzufolge weist der Unterbodenabschnitt 2 sechs gleich lange, geradlinig ausgebildete Randseiten 7 auf, wobei zwischen zwei benachbarten Randseiten 7 jeweils ein gleich großer Winkel α von 120° gebildet ist.

In dem Unterbodenabschnitt 2 sind in diesem Ausführungsbeispiel vier zentral positionierte, gleichmäßig verteilt angeordnete, bohrungsförmige Durchbrechungen 9 vorgesehen. Die Durchbrechungen 9 dienen zur Durchführung von Verbindungsmitteln 11, über welche die erfindungsgemäße Elektrode 1 an der Tierbetäubungsvorrichtung 4 festlegbar ist. Eine Unterseite 8 des Unterbodenabschnitts 2 dient dabei als eine Anlegefläche der Elektrode 1 an die Tierbetäubungsvorrichtung 4.

Den sechs Randseiten 7 des Unterbodenabschnitts 2 ist jeweils ein geradlinig ausgebildeter Seitenwandabschnitt 3.1, 3.2, 3.3, 3.4, 3.5, 3.6 zugeordnet. Die Seitenwandabschnitte 3.1, 3.2, 3.3, 3.4, 3.5, 3.6 sind identisch zueinander geformt. Sie ragen jeweils senkrecht von dem Unterbodenabschnitt 2 ab und weisen an einer der Unterseite 8 des Unterbodenabschnitts 2 gegenüberliegenden Oberkante eine Verzahnung mit jeweils zwei spitzen, zackenförmigen Vorsprüngen 5 auf.

Die Vorsprünge 5 sind ausgebildet, um bei der Elektrobetäubung mit der Tierbetäubungsvorrichtung 4 eine Haut des zu betäubenden Schlachttieres zu durchdringen und während des Betäubungsvorgangs den elektrischen Strom in das Unterhautfettgewebe des Schlachttieres einzuleiten. Insofern ist die erfindungsgemäße Elektrode 1 aus einem elektrisch leitfähigen und bevorzugt aus einem metallischen Elektrodenwerkstoff gefertigt. Einen besonders geeigneten Elektrodenwerkstoff stellt aufgrund einer hohen elektrischen Leitfähigkeit und verhältnismäßigen Werkstoffkosten beispielsweise Kupfer dar.

Die an den Oberkanten der Seitenwandabschnitte 3.1, 3.2, 3.3, 3.4, 3.5, 3.6 vorgesehenen Verzahnungen bilden in diesem Ausführungsbeispiel der erfindungsgemäßen Elektrode 1 einen im Wesentlichen umlaufenden Verzahnungsrand aus. Der Verzahnungsrand ist lediglich durch schmale Längsspalte 6, welche jeweils zwischen zwei benachbarten Seitenwandabschnitten 3.1, 2, 3.3, 3.4, 3.5, 3.6 freigelassen sind, unterbrochen. Dies hat den Vorteil, dass eine nahezu gleiche Anzahl an Vorsprüngen 5 und damit ein für die Elektrobetäubung nutzbarer, ähnlich hoher elektrischer Leitwert gebildet ist, wie bei einem vollständig umlaufenden Verzahnungsrand.

Insbesondere ermöglicht es diese Ausgestaltung der erfindungsgemäßen Elektrode 1, dass sich diese besonders kostengünstig und einfach als ein Blechbiegeteil fertigen lässt, indem die Seitenwandabschnitte 3.1, 3.2, 3.3, 3.4, 3.5, 3.6 in einer Biegeoperation gegenüber dem Unterbodenabschnitt 2 umgebogen werden. Entsprechend lässt sich die erfindungsgemäße Elektrode 1 aus einem blechförmigen Halbzeug 15 fertigen, wie es beispielhaft in der Fig. 3 in einer Draufsicht angegeben ist. Die darin eingezeichneten Randseiten 7 sind als Biegekanten für die Biegeoperation zu verstehen. Das blechförmige Halbzeug 15 kann wirtschaftlich als ein Stanzteil beziehungsweise als ein Leserteil hergestellt werden.

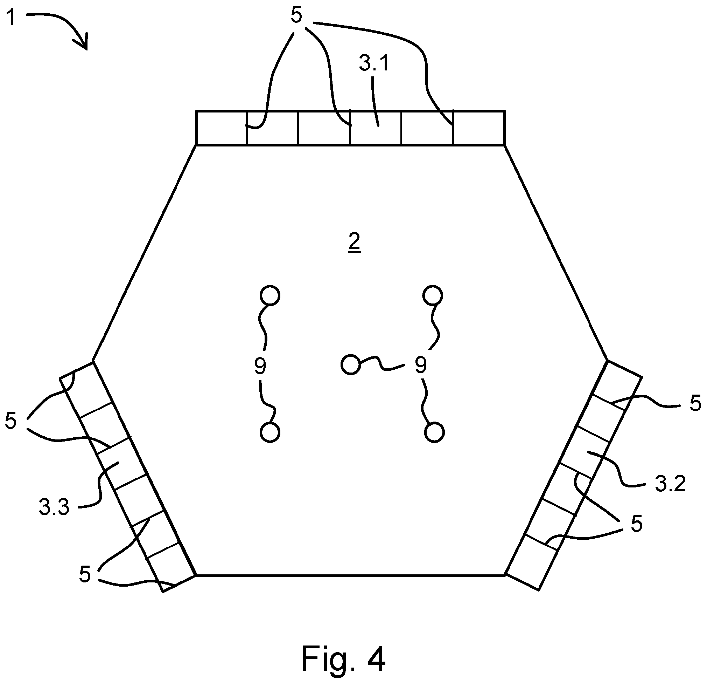

Ein zweites Ausführungsbeispiel der erfindungsgemäßen Elektrode 1 ist in der Fig. 4 in einer Draufsicht angegeben. Der Unterbodenabschnitt 2 ist hierbei analog zu dem ersten Ausführungsbeispiel der erfindungsgemäßen Elektrode 1 nach Fig. 1 als ein regelmäßiges Sechseck ausgebildet. In dem Unterbodenabschnitt 2 sind insgesamt fünf bohrungsförmige Durchbrüche 9 vorgesehen. Die vier gleichmäßig verteilt angeordneten, äußeren Durchbrüche 9 dienen wie gehabt der Durchführung von Verbindungsmittel 11 zum Festlegen der Elektrode 1 an der Tierbetäubungsvorrichtung 4. Der zentral in dem Unterbodenabschnitt 2 platzierten Durchbruch 9 dient zum Durchführen eines Mitteldorns 12, welcher Bestandteil der Tierbetäubungsvorrichtung 4 ist. Auf diesen wird später näher eingegangen.

Im Unterschied zu dem ersten Ausführungsbeispiel der erfindungsgemäßen Elektrode 1 nach Fig. 1, weist das zweite Ausführungsbeispiel nach Fig. 4 lediglich drei geradlinig ausgeführte und senkrecht von dem Unterbodenabschnitt 2 abragende Seitenwandabschnitte 3.1, 3.2, 3.3 auf. Diese sind symmetrisch verteilt drei der insgesamt sechs Randseiten 7 zugeordnet, indem jeweils genau einer Randseite 7 von zwei benachbarten Randseiten 7 ein Seitenwandabschnitt 3.1, 3.2, 3.3 zugeordnet ist. Die Seitenwandabschnitte 3.1, 3.2, 3.3 unterscheiden sich in Bezug auf ihre Verzahnung. Die beiden Seitenwandabschnitte 3.1, 3.2 weisen eine identische Verzahnung auf, wobei jeweils drei zackenförmige Vorsprünge 5 mit zwei schräg ineinanderlaufenden Vorsprungflächen auf der Oberkante gebildet sind. Der dritte Seitenwandabschnitt 3.3 weist insgesamt vier Vorsprüngen 5 an seiner Oberkante auf. Zwei innenliegend angeordnete Vorsprünge 5 sind analog zu den innenliegenden Vorsprüngen der Seitenwandabschnitte 3.1, 3.2 ausgebildet. Zwei außenseitig auf der Oberkante angeordnete Vorsprünge 5 weisen jeweils eine außenliegende, senkrecht verlaufende Vorsprungfläche und eine analog zu den Vorsprungflächen der innenliegenden Vorsprünge 5 geneigte Vorsprungfläche sowie eine identische Vorsprunghöhe auf. Die innenliegenden Vorsprünge 5 sind demzufolge halb so groß, wie die außenliegenden Vorsprünge 5.

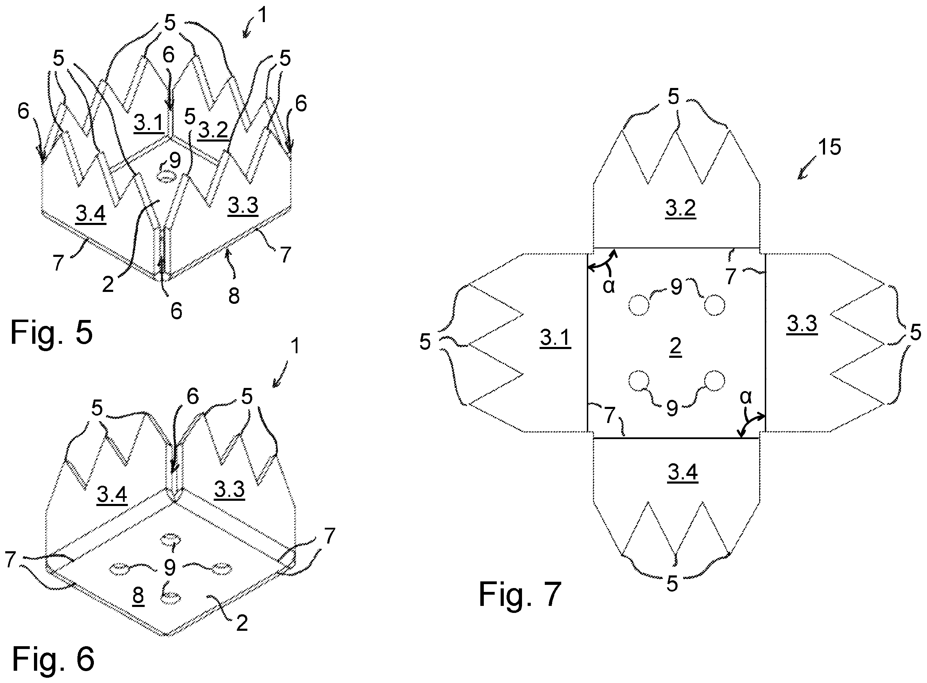

Die Fig. 5 und Fig. 6 zeigen ein drittes Ausführungsbeispiel der erfindungsgemäßen Elektrode 1 jeweils in einer perspektivischen Ansicht. Hierbei ist es so, dass der Unterbodenabschnitt 2 quadratisch geformt ist und demzufolge vier gleich lange, geradlinige Randseiten 7 aufweist, wobei zwei benachbarte Randseiten 7 jeweils rechtwinklig zueinander orientiert sind und gegenüberliegende Randseiten 7 parallel zueinander orientiert sind. Den Randseiten 7 ist jeweils ein senkrecht von dem Unterbodenabschnitt 2 abragender und geradlinig ausgebildeter Seitenwandabschnitt 3.1, 3.2, 3.3, 3.4 zugeordnet. Die Seitenwandabschnitte 3.1, 3.2, 3.3, 3.2 sind zueinander identisch geformt und weisen wie gehabt an einer der Unterseite 8 des Unterbodenabschnitts 2 abgewandten Oberkante die Verzahnung mit den zackenförmigen, spitzen Vorsprüngen 5 auf. Zwischen zwei benachbarten Seitenwandabschnitten 3.1, 3.2, 3.3, 3.4 ist jeweils der Längsspalt 6 freigelassen und der Winkel α als ein rechter Winkel festgelegt. Demzufolge weist die erfindungsgemäße Elektrode 1 in diesem Ausführungsbeispiel eine im Wesentlichen kistenförmige Gestalt auf, mit einem im Wesentlichen umlaufenden Verzahnungsrand. Insofern kann auch dieses Ausführungsbeispiel der erfindungsgemäßen Elektrode 1 besonders wirtschaftlich als ein Blechbiegeteil gefertigt werden. Ein hierfür geeignetes, blechförmiges Halbzeug 15 ist in der Fig. 7 angegeben. Die darin eingezeichneten Randseiten 7 des Unterbodenabschnitts 2 sind wie gehabt als Biegekanten zu verstehen.

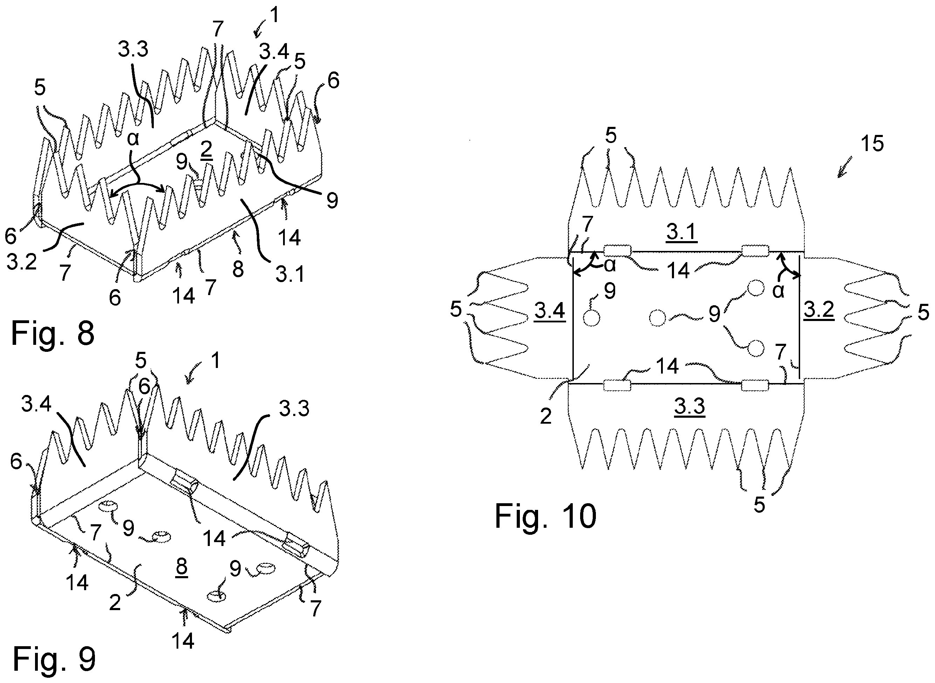

Die Fig. 8 und Fig. 9 zeigen jeweils eine perspektivische Ansicht auf ein viertes Ausführungsbeispiel der erfindungsgemäßen Elektrode 1. Der Unterbodenabschnitt 2 ist hierbei rechteckig geformt. Wie gehabt ragen die verzahnten Seitenwandabschnitte 3.1, 3.2, 3.3, 3.4 senkrecht von dem Unterbodenabschnitt 2 ab und zwei benachbarte Seitenwandabschnitte 3.1, 3.2, 3.3, 3.4 sind jeweils senkrecht zueinander mit dem Winkel α orientiert. Gegenüber dem Ausführungsbeispiel der erfindungsgemäßen Elektrode nach Fig. 5 weisen die Seitenwandabschnitte 3.1, 3.2, 3.3, 3.4 an ihren Oberkanten eine Verzahnung mit besonders stark geneigten, spitzen Vorsprüngen 5 in einer höheren Anzahl auf, welche in eine gemeinsame Anlagefläche vorragen.

In dem Unterbodenabschnitt 2 sind wie gehabt bohrungsförmige Durchbrüche 9 zum Durchführen der Verbindungsmittel 11 vorgesehen, wobei diese eine alternative Anordnung aufweisen. Zusätzlich weist der Unterbodenabschnitt 2 an der Unterseite 8 im Bereich der Randseiten 7, welche den längeren Seitenwandabschnitten 3.1, 3.2 zugeordnet sind, jeweils zwei längliche Aussparungen 14 auf. Die Aussparungen 14 vereinfachen eine Ausrichtung der erfindungsgemäßen Elektrode 1, etwa bei einer Montage an der Tierbetäubungsvorrichtung 4 oder während der Fertigung.

Ein zur Fertigung der erfindungsgemäßen Elektrode 1 nach Fig. 8 verwendbares blechförmiges Halbzeug 15 ist in der Fig. 10 in einer Draufsicht angegeben. Auch hierbei sind die eingezeichneten Randseiten 7 des Unterbodenabschnitts 2 als angedeutete Biegekanten zu verstehen.

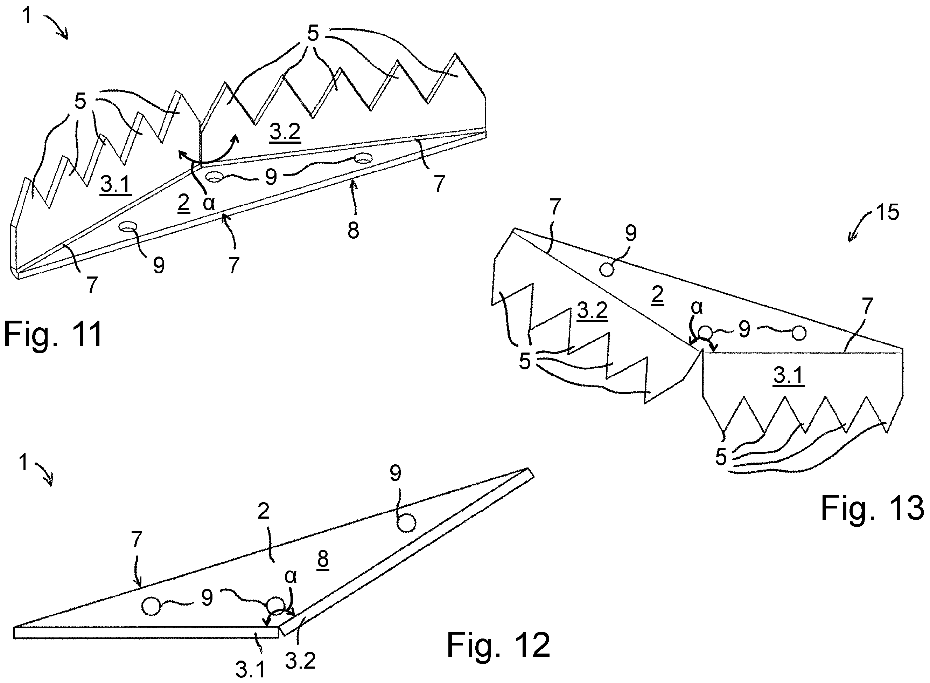

Die erfindungsgemäße Elektrode 1 in einem fünften Ausführungsbeispiel zeigen die Fig. 11 und Fig 12. Dabei gibt Fig. 11 eine perspektivische Ansicht an. Fig. 12 gibt eine Unteransicht an. Die Elektrode 1 weist hier einen dreiecksförmigen Unterbodenabschnitt 2 auf, wobei zwei der drei geradlinigen Randseiten 7 jeweils ein geradliniger Seitenwandabschnitt 3.1, 3.2 zugeordnet ist. Die Seitenwandabschnitte 3.1, 3.2 ragen wie gehabt senkrecht von dem Unterbodenabschnitt 2 ab. Gleichwohl ist es bei diesem Ausführungsbeispiel der erfindungsgemäßen Elektrode 1 so, dass die Seitenwandabschnitte 3.1, 3.2 spaltfrei nebeneinanderliegen. Wie gehabt weisen die Seitenwandabschnitte 3.1, 3.2 an ihren Oberkanten zackenförmige, spitze Vorsprünge 5 auf. Der Unterbodenabschnitt 2 weist drei verteilt angeordnete Durchbrüche 9 zum Durchführen der Verbindungsmittel 11 auf. Die Seitenwandabschnitte 3.1, 3.2 sind hier mit dem Winkel α zirka 130° zueinander orientiert. Sie sind jeweils gleich groß beziehungsweise gleich lang und identisch geformt. Ein zur Herstellung der erfindungsgemäßen Elektrode nach Fig. 11 geeignetes blechförmiges Halbzeug 15 ist in Fig. 13 in einer Draufsicht dargestellt. Dabei sind die Randseiten 7 als angedeutete Biegekanten zum Umbiegen der Seitenwandabschnitte 3.1, 3.2 gegenüber dem Unterbodenabschnitt 2 zu verstehen.

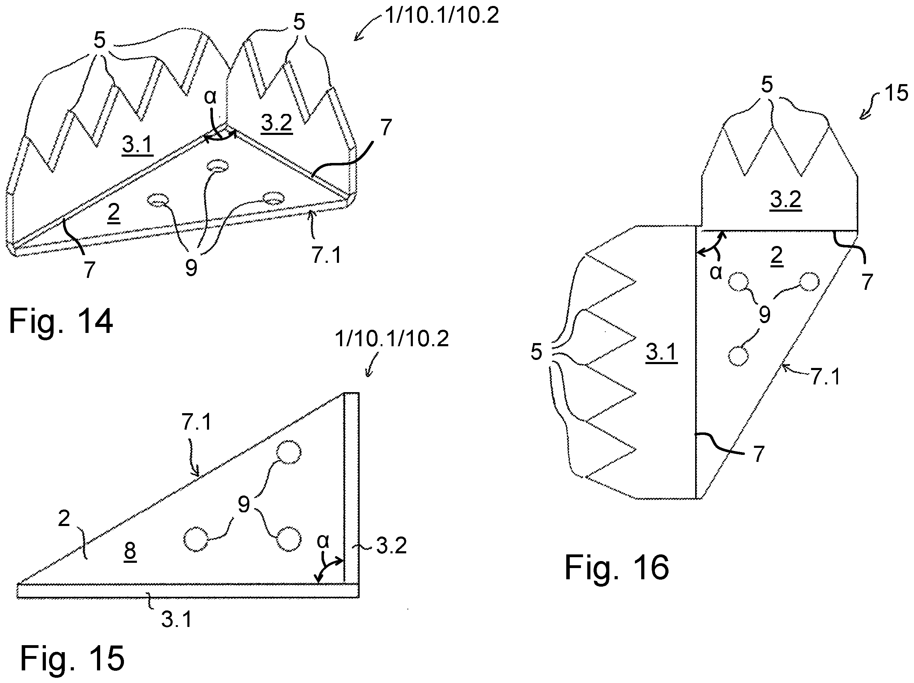

Die Fig. 14 und Fig. 15 zeigen ein sechstes Ausführungsbeispiel der erfindungsgemäßen Elektrode 1 jeweils in einer perspektivischen Ansicht an. Die Elektrode 1 weist in diesem Ausführungsbeispiel einen Unterbodenabschnitt 2 in der Form eines rechtwinkligen Dreiecks auf. Hierbei sind zwei Randseiten 7 des Unterbodenabschnitts 2 rechtwinklig zueinander orientiert, wobei diesen Randseiten 7 jeweils ein geradliniger Seitenwandabschnitt 3.1, 3.2 zugeordnet ist.

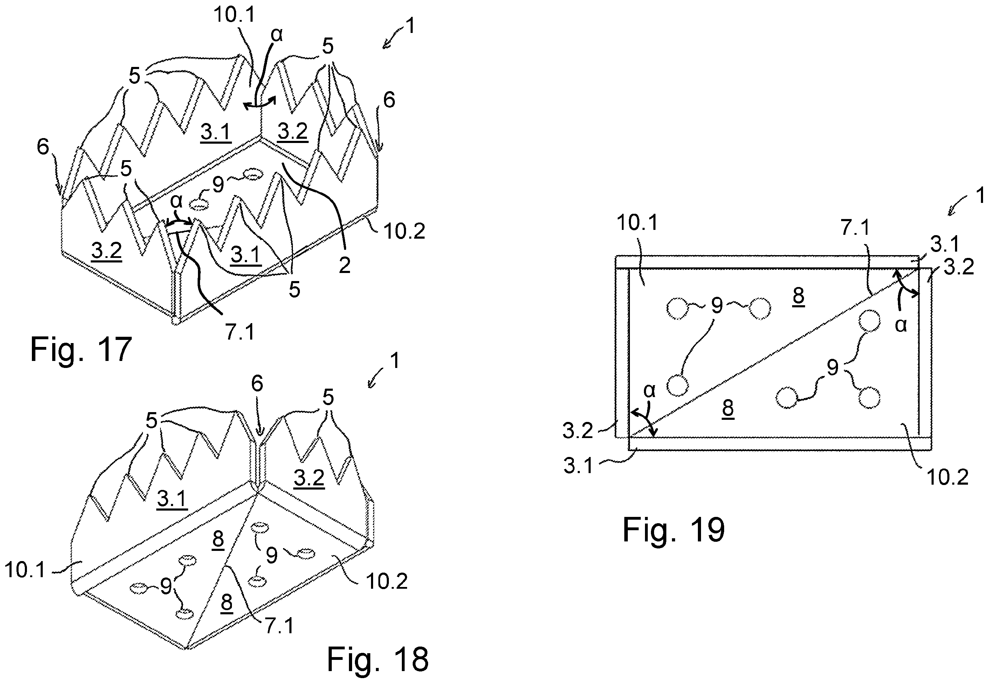

Die Seitenwandabschnitte 3.1, 3.2 sind spaltfrei und mit dem rechten Winkel α zueinander orientiert, wobei sie wie gehabt rechtwinklig von dem Unterbodenabschnitt 2 abragen und an den Oberkanten verzahnt sind. Die Elektrode 1 kann in diesem Ausführungsbeispiel für sich genommen an die Tierbetäubungsvorrichtung 4 montiert und zur Elektrobetäubung verwendet werden. Zudem kann sie ausgebildet sein als eine mehrteilige Elektrode 1. In diesem Fall dient eine freie, keinem Seitenwandabschnitt 3.1, 3.2 zugeordnete Randseite 7 als eine Anlagekante 7.1, an welche die als Elektrodenstück 10.1, 10.2 ausgebildeten Elektroden 1 aneinander angelegt sind. Ein Ausführungsbeispiel der mehrteiligen Elektrode 1 ist in den nachfolgenden Fig. 17 bis Fig. 19 angegeben. Wie gehabt lässt sich die erfindungsgemäße Elektrode 1 nach Fig. 14 als ein kostengünstiges Blechbiegeteil fertigen. Ein Ausführungsbeispiel eines entsprechenden blechförmigen Halbzeugs 15 ist in einer Draufsicht in Fig. 16 dargestellt, wobei wie gehabt die eingezeichneten Randseiten 7 angedeutete Biegekanten darstellen sollen.

Ein siebtes Ausführungsbeispiel für eine nicht erfindungsgemäße Elektrode 1 zeigen die Fig. 17 bis Fig. 19. Hierbei ist die Elektrode 1 mehrteilig ausgebildet, aus einem ersten Elektrodenstück 10.1 nach Fig. 14 und aus einem daran angelegten, gleichgeformten zweiten Elektrodenstück 10.2 nach Fig. 14. Die Elektrodenstücke 10.1, 10.2 sind hier so entlang der als Anlagekante 7.1 ausgebildeten Randseite 7 aneinander angelegt, dass sie einen rechteckförmigen Unterbodenabschnitt 2 und vier jeweils senkrecht davon abragende Seitenwandabschnitte 3.1, 3.2. Dabei sind zwei zueinander benachbarte Seitenwandabschnitte 3.1, 3.2 jeweils rechtwinklig zueinander mit dem Winkel α orientiert. In diesem Ausführungsbeispiel der mehrteiligen Elektrode 1 ist es so, dass die Seitenwandabschnitte 3.1, 3.2 einen im Wesentlichen umlaufenden Verzahnungsrand bilden, der lediglich dadurch unterbrochen ist, dass zwischen einem Seitenwandabschnitt 3.1, 3.2 des ersten Elektrodenstücks 10.1 und einem dazu benachbarten Seitenwandabschnitt 3.1, 3.2 des zweiten Elektrodenstücks 10.2 jeweils der Längsspalt 6 freigelassen ist.

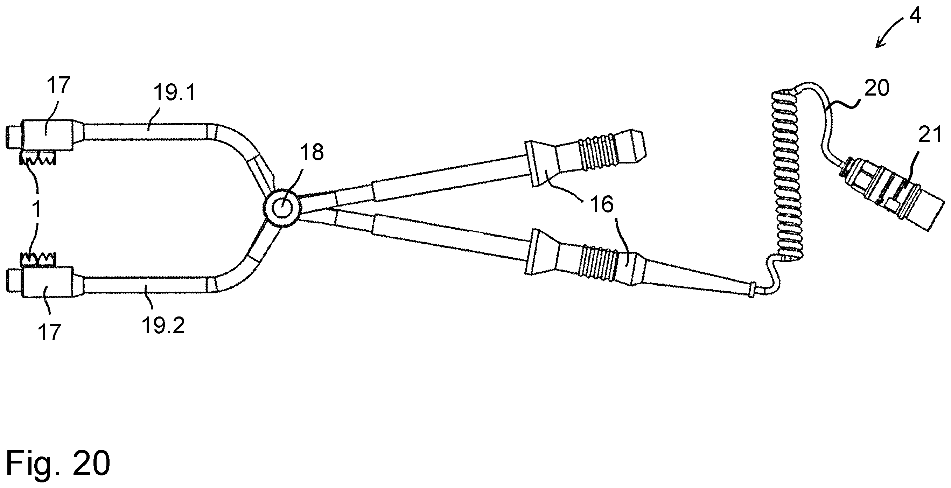

Die Fig. 20 zeigt in einer Seitendarstellung ein Ausführungsbeispiel der Tierbetäubungsvorrichtung 4 mit zwei daran festgelegten, erfindungsgemäßen Elektroden 1 nach Fig. 1. Die Tierbetäubungsvorrichtung 4 ist hier zangenförmig ausgebildet und weist einen ersten Zangenschenkel 19.1 und einen zweiten Zangenschenkel 19.2 auf, welche über ein Zangengelenk 18 gegenläufig zueinander verschwenkbar festgelegt sind.

Die Zangenschenkel 19.1, 19.2 weisen an einem ersten Ende jeweils einen Elektrodenkopf 17 auf, an welchem die erfindungsgemäße Elektrode 1 festgelegt ist. An einem dem Elektrodenkopf 17 gegenüberliegenden zweiten Ende weisen die Zangenschenkel 19.1, 19.2 jeweils eine elektrisch isolierte Isoliergriffkappe 16 auf, um ein elektrisch isoliertes Umgreifen der Tierbetreuungsvorrichtung 4 zu ermöglichen. Insofern ist die Tierbetäubungsvorrichtung 4 in diesem Ausführungsbeispiel für eine manuelle Elektrobetäubung ausgelegt.

Zudem weist die Tierbetäubungsvorrichtung 4 zur elektrischen Bestromung eine von dem zweiten Ende des ersten Zangenschenkels 19.1 ausgehende Stromanschlussleitung 20 mit einem endseitig daran festgelegten Stromanschlussstecker 21 zur elektrischen Kontaktierung mit einem figürlich nicht dargestellten Betäubungsgerät auf.

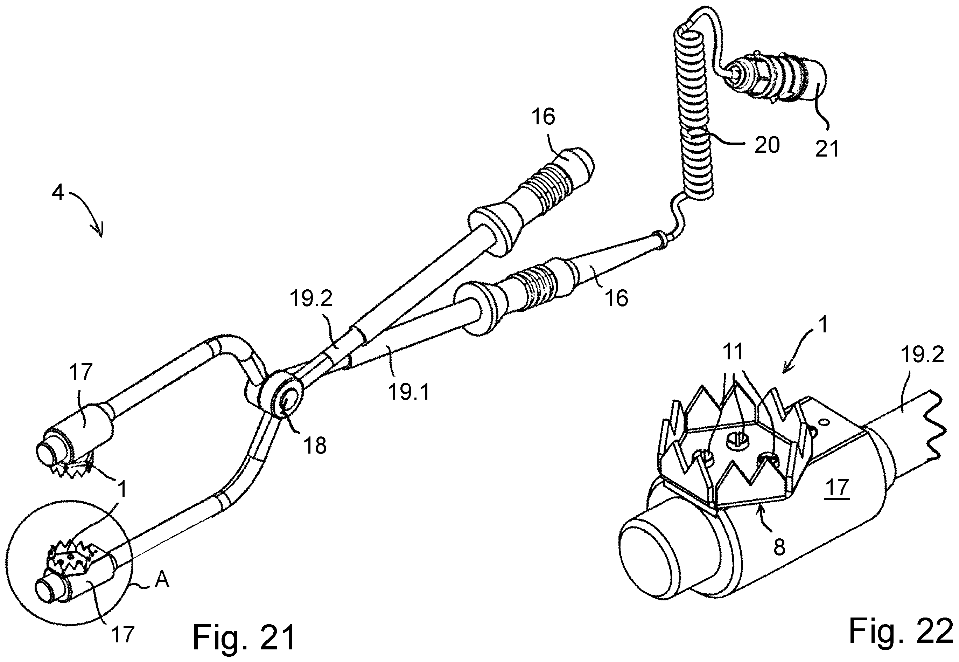

Die Fig. 21 zeigt die Tierbetäubungsvorrichtung 4 nach Fig. 20 mit den beiden daran festgelegten Elektroden 1 nach Fig. 1 in einer perspektivischen Ansicht. Hieraus geht hervor, dass die Elektroden 1 auf einer gleichen Höhe an den Elektrodenköpfen 17 der Zangenschenkel 19.1, 19.2 festgelegt sind. Ein Detail A der Tierbetäubungsvorrichtung 4 nach Fig. 21 mit der daran festgelegten Elektrode 1 nach Fig. 1 zeigt die Fig. 22. Dabei ist die Unterseite 8 des Unterbodenabschnitts 2 der Elektrode 1 flächig an den Elektrodenkopf 17 der Tierbetäubungsvorrichtung 4 angelegt. Die Elektrode 1 ist über insgesamt drei lösbare Verbindungsmittel 11, in diesem Fall Schrauben, welche durch die in dem Unterbodenabschnitt 2 vorgesehenen Durchbrüche 9 durchgeführt sind, an der Tierbetäubungsvorrichtung 4 festgelegt. So kann die Elektrode 1 bei Bedarf, etwa infolge einer verschleißbedingten Abnutzung oder zu Reinigungszwecken, schnell und einfach von der Tierbetäubungsvorrichtung 4 demontiert werden beziehungsweise ausgetauscht werden.

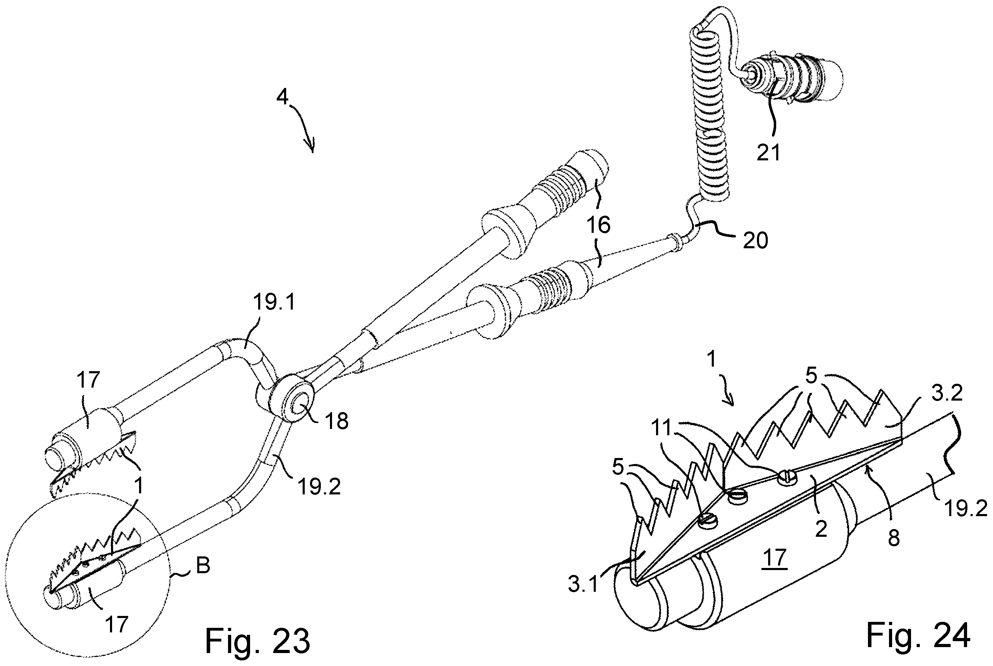

Die Fig. 23 zeigt eine perspektivische Ansicht der Tierbetäubungsvorrichtung 4 nach Fig. 20, wobei hier jeweils die erfindungsgemäße Elektrode 1 nach Fig. 11 an den Elektrodenköpfen 17 der Zangenschenkel 19.1, 19.2 montiert ist. Der Elektrodenkopf 17 des zweiten Zangenschenkels 19.2 ist vergrößert in Fig. 24 als ein Detail B nach Fig. 23 dargestellt. Die Elektrode 1 ist wie gehabt über die als Schrauben ausgeführten lösbaren Verbindungsmittel 11 an dem Elektrodenköpfen 17 festgelegt, wobei sie mit der Unterseite 8 des Unterbodenabschnitts 2 flächig an die Elektrodenköpfe 17 angelegt ist.

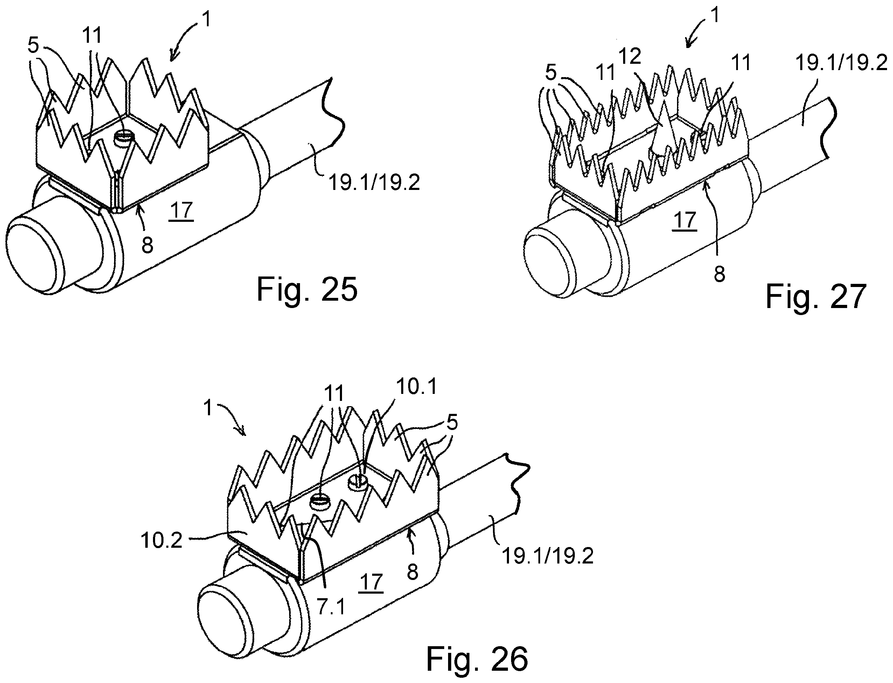

Die Fig. 25 bis Fig. 27 zeigen den Elektrodenkopf 17 eines Zangenschenkels 19.1, 19.2 der Tierbetäubungsvorrichtung 4 nach Fig. 20 mit der daran festgelegten erfindungsgemäßen Elektrode 1 jeweils in einer unterschiedlichen Ausführungsform. Die Elektroden 1 sind hierbei wie gehabt jeweils mit der Unterseite 8 an dem Elektrodenkopf 17 angelegt und an demselben über die schraubenförmigen, lösbaren Verbindungsmittel 11 festgelegt.

Die Fig. 25 zeigt die erfindungsgemäße Elektrode 1 in dem Ausführungsbeispiel nach Fig. 5 festgelegt an dem Elektrodenkopf 17.

Die Fig. 26 zeigt die mehrteilig ausgebildete Elektrode 1 in dem Ausführungsbeispiel nach Fig. 17 in einer Zusammenbauposition festgelegt an dem Elektrodenkopf 17.

Die Fig. 27 zeigt die erfindungsgemäße Elektrode 1 in dem Ausführungsbeispiel nach Fig. 8 festgelegt an dem Elektrodenkopf 17, wobei hier der Mitteldorn 12 durch einen Durchbruch 9 in dem Unterbodenabschnitt 2 der Elektrode 1 durchgeführt und an dem Elektrodenkopf 17 festgelegt ist.

Der Mitteldorn 12 dient zur zusätzlichen Fixierung der Tierbetäubungsvorrichtung 4 an dem zu betäubenden Schlachttier. Um hierfür die Haut des Schlachttieres möglichst widerstandsfrei beziehungsweise kraftschonend durchdringen zu können, weist der Mitteldorn 12 eine spitz zulaufende konische Form auf. Weiter kann vorgesehen sein, dass der Mitteldorn 12 elektronisch leitend ausgeführt ist und zusätzlich zu der erfindungsgemäßen Elektrode 1 elektrischen Strom zur Betäubung in das Unterhautfettgewebe des Schlachttieres injiziert.

Die Erfindung ist nicht auf die dargestellten Ausführungsbeispiele der erfindungsgemäßen Elektrode 1 beschränkt.

So kann unter Beibehaltung der erfinderischen Idee der Unterbodenabschnitt 2 eine abweichende Gestalt aufweisen. Vorteilhafte Ausführungsformen der erfindungsgemäßen Elektrode 1 sehen vor, dass der Unterbodenabschnitt 2 als ein regelmäßiges beziehungsweise unregelmäßiges Polygon mit winkelig zueinander orientierten, einen Streckenzug bildenden Randseiten 7 ausgeführt ist. Demzufolge weist der Unterbodenabschnitt 2 die Form eines Dreiecks, eines Vierecks, eines Fünfecks, eines Sechsecks oder eines regelmäßigen beziehungsweise unregelmäßigen Polygons höherer Ordnung mit sieben oder mehr Randseiten 7 auf.

Abweichende Formen für die Seitenwandabschnitte 3.1, 3.2, 3.3, 3.4, 3.5, 3.6 sind ebenfalls denkbar. Beispielsweise können die geradlinigen Seitenwandabschnitte 3.1, 3.2, 3.3, 3.4, 3.5, 3.6 eine schräge Verzahnung mit schräg zu denselben orientierten Vorsprüngen 5 aufweisen oder eine unterschiedliche Seitenwandhöhe beziehungsweise eine winkelig zu den Randseiten (7) orientierte beziehungsweise profiliert geformte Oberkante. Die an den Oberkanten der Seitenwandabschnitte 3.1, 3.2, 3.3, 3.4, 3.5, 3.6 ausgebildeten Vorsprünge 5 können zudem voneinander abweichend geformt sein und eine unterschiedliche Vorsprunghöhe beziehungsweise Vorsprungsteigung aufweisen.

Die erfindungsgemäße Elektrode 1 lässt sich grundsätzlich an unterschiedlich ausgeführten Tierbetäubungsvorrichtungen 4 montieren und verwenden, die von dem in den Figuren dargestellten Ausführungsbeispiel der Tierbetäubungsvorrichtung 4 zur manuellen Elektrobetäubung abweichen können. So kann die erfindungsgemäße Elektrode 1 unter Beibehaltung der erfinderischen Idee auch an vollautomatischen beziehungsweise nicht zangenförmig ausgeführten Tierbetäubungsvorrichtungen 4 montiert und verwendet werden.

Gleiche Bauteile und Bauteilfunktionen sind mit gleichen Bezugszeichen gekennzeichnet.

## Patentansprüche

1. Elektrode (1) für eine Tierbetäubungsvorrichtung (4) umfassend einen an die Tierbetäubungsvorrichtung (4) festlegbaren Unterbodenabschnitt (2) und umfassend wenigstens zwei geradlinig ausgebildete und von dem Unterbodenabschnitt (2) abragende Seitenwandabschnitte (3.1, 3.2, 3.3, 3.4, 3.5, 3.6), wobei an einer dem Unterbodenabschnitt (2) abgewandten Oberkante der Seitenwandabschnitte (3.1, 3.2, 3.3, 3.4, 3.5, 3.6) eine Verzahnung mit zackenförmigen Vorsprüngen (5) ausgebildet ist, wobei die Elektrode (1) einstückig als ein Blechbiegeteil hergestellt ist, wobei der Unterbodenabschnitt (2) geradlinig ausgebildete Randseiten (7) aufweist, an denen die Seitenwandabschnitte (3.1, 3.2, 3.3, 3.4, 3.5, 3.6) festgelegt sind, **dadurch gekennzeichnet, dass** ein erster Seitenwandabschnitt und ein zweiter Seitenwandabschnitt mit einem Winkel im Bereich von 30° bis 150° zueinander orientiert sind.

2. Elektrode (1) nach Anspruch 1, **dadurch gekennzeichnet, dass** wenigstens drei Seitenwandabschnitte (3.1, 3.2, 3.3, 3.4, 3.5, 3.6) umfasst sind, wobei jeweils zwei benachbarte Seitenwandabschnitte (3.1, 3.2, 3.3, 3.4, 3.5, 3.6) mit dem Winkel (α) im Bereich von 30° bis 150° zueinander orientiert sind.

3. Elektrode (1) nach Anspruch 1 oder 2, **dadurch gekennzeichnet, dass** zwischen den zwei benachbarten Seitenwandabschnitten (3.1, 3.2, 3.3, 3.4, 3.5, 3.6) und/oder zwischen dem ersten Seitenwandabschnitt (3.1) und dem zweiten Seitenwandabschnitt (3.2) ein Längsspalt (6) gebildet ist.

4. Elektrode (1) nach einem der Ansprüche 1 bis 3, **dadurch gekennzeichnet, dass** die Verzahnungen der Seitenwandabschnitte (3.1, 3.2, 3.3, 3.4, 3.5, 3.6) einen im Wesentlichen umlaufenden Verzahnungsrand ausbilden.

5. Elektrode (1) nach einem der Ansprüche 1 bis 4, **dadurch gekennzeichnet, dass** die Vorsprünge (5) der Verzahnungen des Verzahnungsrands in eine gemeinsame Anlagefläche vorragen.

6. Elektrode (1) nach einem der Ansprüche 1 bis 5, **dadurch gekennzeichnet, dass** jedenfalls einige Seitenwandabschnitte (3.1, 3.2, 3.3, 3.4, 3.5, 3.6) rechtwinklig und/oder parallel zueinander ausgerichtet sind und/oder rechtwinklig von dem Unterbodenabschnitt (2) abragen.

7. Elektrode (1) nach einem der Ansprüche 1 bis 6, **dadurch gekennzeichnet, dass** in dem Unterbodenabschnitt (2) Durchbrüche (9) vorgesehen sind, zum Durchführen von Verbindungsmitteln (11), über welche die Elektrode (1) in einer Montageposition an die Tierbetäubungsvorrichtung (4) festgelegt ist, und/oder zum Durchführen eines Mitteldorns (12), welcher über die Vorsprünge (5) der Verzahnung der Seitenwandabschnitte (3.1, 3.2, 3.3, 3.4, 3.5, 3.6) hinausragt.

8. Elektrode (1) nach einem der Ansprüche 1 bis 7, **dadurch gekennzeichnet, dass** der Unterbodenabschnitt (2) als ein Polygon und bevorzugt als ein regelmäßiges Polygon ausgebildet ist und wenigstens drei Randseiten (7) aufweist, wobei wenigstens zwei Randseiten (7) des Unterbodenabschnitts (2) jeweils ein Seitenwandabschnitt (3.1, 3.2, 3.3, 3.4, 3.5, 3.6) zugeordnet ist.

9. Elektrode (1) nach einem der Ansprüche 1 bis 8, **dadurch gekennzeichnet, dass** der Unterbodenabschnitt (2) und/oder die Seitenwandabschnitte (3) eben und/oder flächig ausgebildet sind.

10. Elektrode (1) nach einem der Ansprüche 1 bis 9, **dadurch gekennzeichnet, dass** die Elektrode (1) mittels eines Laser-Biegeverfahrens hergestellt ist.

## Claims

1. An electrode (1) for an animal stunning device (4) comprising an underbody portion (2) fixable to the animal stunning device (4) and comprising at least two side wall portions (3.1, 3.2, 3.3, 3.4, 3.5, 3.6) formed in a straight-lined manner and projecting from the underbody portion (2), wherein a toothing with serrated projections (5) is formed on an upper edge of the side wall portions (3.1, 3.2, 3.3, 3.4, 3.5, 3.6) facing away from the underbody portion (2), wherein the electrode (1) is manufactured in one piece as a bent sheet metal part, wherein the underbody portion (2) has edge sides (7) formed in a straight-lined manner to which the side wall portions (3.1, 3.2, 3.3, 3.4, 3.5, 3.6) are fixed, **characterized in that** a first side wall portion and a second side wall portion are oriented with respect to one another with an angle in the range of 30° to 150°.

2. The electrode (1) according to claim 1, **characterized in that** at least three side wall portions (3.1, 3.2, 3.3, 3.4, 3.5, 3.6) are comprised, wherein in each case two adjacent side wall portions (3.1, 3.2, 3.3, 3.4, 3.5, 3.6) are oriented with respect to one another with the angle (α) in the range of 30° to 150°.

3. The electrode (1) according to claim 1 or 2, **characterized in that** a longitudinal gap (6) is formed between the two adjacent side wall portions (3.1, 3.2, 3.3, 3.4, 3.5, 3.6) and/or between the first side wall portion (3.1) and the second side wall portion (3.2).

4. The electrode (1) according to any of claims 1 to 3, **characterized in that** the toothings of the side wall portions (3.1, 3.2, 3.3, 3.4, 3.5, 3.6) form a substantially circumferential toothing rim.

5. The electrode (1) according to any of claims 1 to 4, **characterized in that** the projections (5) of the toothings of the toothing rim project into a common lay-on surface.

6. The electrode (1) according to any of claims 1 to 5, **characterized in that** in any case some side wall portions (3.1, 3.2, 3.3, 3.4, 3.5, 3.6) are aligned at right angles and/or parallel to one another and/or project at right angles from the underbody portion (2).

7. The electrode (1) according to any of claims 1 to 6, **characterized in that** apertures (9) are provided in the underbody portion (2) for passing through connecting means (11), via which the electrode (1) is fixed to the animal stunning device (4) in a mounting position, and/or for passing through a central pin (12) which projects beyond the projections (5) of the toothing of the side wall portions (3.1, 3.2, 3.3, 3.4, 3.5, 3.6).

8. The electrode (1) according to any of claims 1 to 7, **characterized in that** the underbody portion (2) is formed as a polygon and preferably as a regular polygon and has at least three edge sides (7), wherein at least two edge sides (7) of the underbody portion (2) each have assigned a side wall portion (3.1, 3.2, 3.3, 3.4, 3.5, 3.6).

9. The electrode (1) according to any of claims 1 to 8, **characterized in that** the underbody portion (2) and/or the side wall portions (3) are formed flat and/or planar.

10. The electrode (1) according to any of claims 1 to 9, **characterized in that** the electrode (1) is manufactured by means of a laser bending method.

## Revendications

1. Électrode (1) pour un dispositif (4) d'étourdissement d'animaux comprenant une section de fond (2) pouvant être fixée au dispositif d'étourdissement (4) et comprenant au moins deux sections latérales (3.1, 3.2, 3.3, 3.4, 3.5, 3.6) de conformation rectiligne qui dépassent vers le haut de la section de fond (2) et dont un bord supérieur opposé à la section de fond (2) forme une denture présentant des saillies (5) en dents de scie, l'électrode (1) étant une pièce de tôle pliée formée d'un seul tenant et la section de fond (2) présentant des bords (7) de forme rectiligne auxquels sont fixées les sections latérales (3.1, 3.2, 3.3, 3.4, 3.5, 3.6), **caractérisée en ce qu'**une première section latérale et une deuxième section latérale sont orientées de façon à former entre elles un angle compris entre 30° et 150°.

2. Électrode (1) selon la revendication 1, **caractérisée en ce qu'**elle comprend au moins trois sections latérales (3.1, 3.2, 3.3, 3.4, 3.5, 3.6) respectivement orientées de façon à ce que deux sections latérales (3.1, 3.2, 3.3, 3.4, 3.5, 3.6) voisines forment entre elles un angle compris entre 30° et 150°.

3. Électrode (1) selon la revendication 1 ou 2, **caractérisée en ce qu'**une fente longitudinale (6) est formée entre deux sections latérales (3.1, 3.2, 3.3, 3.4, 3.5, 3.6) voisines et/ou entre la première section latérale (3.1) et la deuxième section latérale (3.2).

4. Électrode (1) selon l'une des revendications 1 à 3, **caractérisée en ce que** les dentures des sections latérales (3.1, 3.2, 3.3, 3.4, 3.5, 3.6) forment un bord denté essentiellement périphérique.

5. Électrode (1) selon l'une des revendications 1 à 4, **caractérisée en ce que** les saillies (5) des dentures du bord denté saillent dans une surface de contact commune.

6. Électrode (1) selon l'une des revendications 1 à 5, **caractérisée en ce qu'**en tout cas certaines des sections latérales (3.1, 3.2, 3.3, 3.4, 3.5, 3.6) sont orientées de façon orthogonales et/ou parallèles entre elles et/ou saillent perpendiculairement de la section de fond (2).

7. Électrode (1) selon l'une des revendications 1 à 6, **caractérisée en ce que** dans la section de fond (2) sont prévus des ouvertures (9) pour le passage de moyen d'assemblage (11) au moyen desquels l'électrode (1), en position de montage, est fixée au dispositif (4) d'étourdissement d'animaux, et/ou pour le passage d'un poinçon médian (12) qui dépasse les saillies (5) de la denture de la sections latérales (3.1, 3.2, 3.3, 3.4, 3.5, 3.6).

8. Électrode (1) selon l'une des revendications 1 à 7, **caractérisée en ce que** la section de fond (2) a une forme polygonale et de préférence une forme de polygone régulier qui présente au moins trois côtés (7), une section latérale (3.1, 3.2, 3.3, 3.4, 3.5, 3.6) étant respectivement affectée à au moins deux des côtés (7) de la section de fond (2).

9. Électrode (1) selon l'une des revendications 1 à 8, **caractérisée en ce que** la section de fond (2) et/ou les sections latérales (3) sont planes et/ou de conformation bidimensionnelle.

10. Électrode (1) selon l'une des revendications 1 à 9, **caractérisée en ce que** l'électrode (1) est fabriquée au moyen d'un procédé de pliage au laser.
